# FASCICULE DE BREVET EUROPEEN

(11) **EP 0 556 526 B1**
(45) Date de publication et mention de la délivrance du brevet: **08.06.1994**
(21) Numéro de dépôt: 92440026.0
(22) Date de dépôt: 21.02.1992
(51) Int. Cl.: B65D 77/20

(54) **Récipients recyclables, procédé de leur fabrication, et opercule de fermeture**
Wiederverwertbare Behälter, Verschlussdeckel hierfür und Verfahren zu deren Herstellung
Recyclable containers, their method of manufacture, and closure lid

(43) Date de publication de la demande: 25.08.1993
(73) Titulaire: COFRADEC S.A., F-59530 Le Quesnoy (FR)
(72) Inventeur: Descamps François, F-59138 Pont-Sur-Sambre (FR); Dupont, Guy, B-7050 Jurbise (BE); Bouvry, Jean-Luc, F-59420 Mouvaux (FR)
(74) Mandataire: Seehof, Michel

(56) Documents cités:
- EP-A- 0 347 825
- FR-A- 2 247 397
- FR-A- 2 483 307

## Description

L'invention appartient au domaine de l'emballage et du recyclage. Elle concerne en particulier des récipients en matière synthétique polymère recyclables. L'invention a pour objet supplémentaire une opercule de fermeture pour ces récipients.

En général, on entend par "récipient" tout conteneur fabriqué en matière polymère, en général par extrusion, et ayant des rebords sur lesquels est fixé une opercule après remplissage, à savoir une feuille mince en matière polymère comprenant une barrière, par exemple en film d'aluminium. Les récipients de l'invention sont utilisés primairement pour contenir les produits laitiers pour la vente au détail tels que lait, crème, yaourt, desserts etc., mais aussi des produits cosmétiques et pharmaceutiques, des produits chimiques, etc. Il va de soi que, si le récipient est destiné à contenir des produits alimentaires, aucune substance présentant des risques contre la santé n'est tolérée pour fabriques le récipient.

Le recyclage des matières utilisées est devenu une nécessité dans le monde actuel, et la technique et l'économie ne sont qu'au début de la réalisation de ce principe. En effet, l'humanité devient de plus en plus consciente que les ressources de la nature ne sont pas inépuisables, et que la fabrication d'articles à partir de matières premières telles que pétrole gaz naturel et charbon devient toujours plus onéreuse, du fait de l'augmentation des prix de ces matières en raison de leur rareté progressive.

Il est donc de plus en plus nécessaire d'appliquer le recyclage d'articles utilisés et jetés. Ceci concerne en particulier les emballages et parmi eux spécialement les récipients de toute sorte, fabriqués en chaîne par thermoformage à partir d'une bande de matière polymère synthétique.

La description qui suit se réfère à des pots ou barquettes pour yaourt, mais il est bien entendu qu'elle ne se limite pas à ce cas spécial. Au contraire, elle est valable par analogie pour tout récipient tel que défini ci-dessus.

Selon l'état de la technique, le pot est thermoformé par emboutissage à chaud à partir d'un film en matière thermoplastique comme le polystyrène modifié ou non par copolymérisation ou par additifs. L'opération d'emboutissage crée un affaiblissement important des parois latérales du pot. Il est donc en général nécessaire de consolider ces parois. Cette fonction de consolidation est remplie par le collage autour du pot d'une banderole en papier "hot melt", à savoir d'une bande de papier recouverte d'une colle thermocollante, ce qui apporte la rigidité nécessaire et sert de plus à la promotion du produit que contient le pot, normalement par impression.

Le pot ainsi formé en continu est ensuite rempli et operculé par thermocollage ou thermosoudage d'un film de matière composite. Habituellement, les opercules sont réalisées à partir d'une combinaison de films en a) aluminium, b) papier et c) polyester, enductions vinyliques, chlorure de polyvinyle (PVC), nitrocellulosiques, acryliques, etc.

Le document FR-A-2′247′397 décrit un couvercle pour fermer de petits récipients pour emballage, et ce couvercle est constitué par une feuille de polymère de styrène, par exemple orienté biaxialement.

Lorsqu'on veut ou doit recycler les pots vides et leur opercule, on se trouve en face d'un problème difficile à résoudre à cause de la multitude des différents produits impliqués. En effet, les composants sont les suivants:
- papier,
- aluminium,
- polyester,
- polyuréthane,
- polystyrène,
- PVC,
- vinyliques,
- nitrocelluloses, etc....

Il est donc impossible de procéder à un recyclage économiquement justifiable car la séparation de tous ces constituants est très compliquée et coûteuse,

Le but de la présente invention est de créer un récipient et une opercule facilement et économiquement recyclables et un procédé pour la fabrication du récipient operculé recyclable.

L'invention vise tout spécialememt, dans le contexte du recyclage, la suppression de la couche d'aluminium dans les opercules utilisées jusqu'à présent, et de toute autre matière qui doit être séparée du mélange récupéré par un procédé compliqué ou coûteux.

Le récipient selon l'invention, le procédé de sa fabrication, la nouvelle opercule et une feuille d'emballage sont définis dans les revendications indépendantes tandis que les revendications dépendantes se réfèrent aux modes de réalisation particuliers de l'invention.

La séparation du papier et des autres composants cellulosiques des récipients et opercules récupérés ne pose en général pas de problème. Cette séparation s'effectue de manière connue en soi, au cours du lavage en phase aqueuse des récipients, et ces composants peuvent également être récupérés si cela est souhaité ou justifié. Pour être certain que toutes les fibres ont été récupérées, et donc qu'il n'en reste aucune qui pourrait gêner le recyclage des composants en plastique, le papier utilisé pour la banderole est enduit, selon l'invention, d'une laque PVA (alcool polyvinylique) avant d'être collé sur le récipient.

Le rôle de cette laque sera multiple:
- empêcher la pénétration du hot melt en fusion dans le papier tout en conservant une adhésion suffisante;
- permettre une séparation propre et complète des composants papier et plastique par dissolution du PVA dans le bain de défibrage lors de la récupération des fibres du papier;
- éviter la pénétration des encres d'imprimerie pour les isoler facilement;
- apporter au pot un supplément de barrière à la fois en O₂ et en vapeur d'eau.

Le recyclage de la composante plastique sera expliqué plus loin.

L'invention sera mieux comprise grâce à la description détaillée, à titre d'exemple, d'un mode de réalisation; après avoir exposé le procédé global, en principe connu en soi, on décrira celui de la formation des pots selon l'invention, du recyclage, et du récipient rempli et fermé. Ensuite, les différentes caractéristiques de l'invention seront exposées.

Dans la description qui suit, on se réfère au dessin dans lequel:
- la Fig. 1 montre très schématiquement une chaîne de fabrication des pots remplis et fermés;
- la Fig. 2 représente la coupe transversale d'un pot operculé;
- la Fig. 3 représente le comportement du film d'aluminium faisant partie de l'opercule connue, sous forme de graphe.

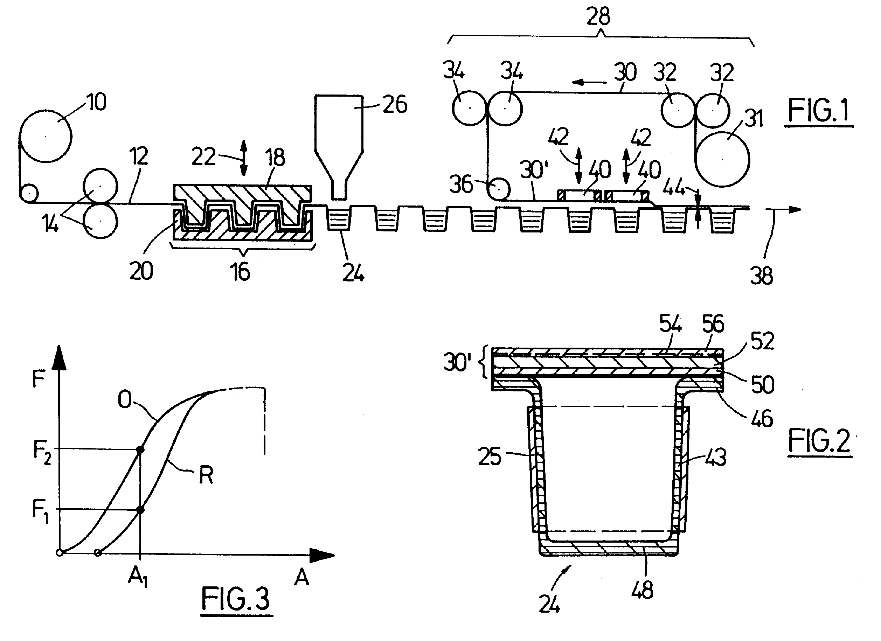

La chaîne de fabrication représentée sous forme de schéma très simplifié à la Fig. 1 n'appartient par elle-même pas à l'invention mais sa compréhension paraît nécessaire pour saisir l'invention et son importance.

La chaîne de fabrication représentée comprend une station 16 de thermoformage des pots, une station de remplissage 26, et une station d'operculage 28. Une bande de matière thermoplastique (12) (un film), typiquement un film en polystyrène non orienté ayant une épaisseur comprise entre 0,2 et 1 mm, est déroulée d'une bobine 10 et alimentée par la paire de cylindres 14 dans la station de thermoformage 16. Dans cette station, un emboutisseur chauffé 18 presse la bande 12 dans les creux de la matrice 20, selon la flèche 22, et se retire ensuite, formant ainsi une série continue de pots 24 qui sont toujours attachés l'un à l'autre par la bande 12.

Ces pots 24 sont alors remplis d'une quantité de produit prédéterminée et mesurée dans la station de remplissage 26. La série continue des pots 24 est ensuite operculée dans la station 28. La séparation des pots de la bande les rattachant encore l'un à l'autre n'est pas représentée et s'effectuera selon la technique connue. La banderole en papier mentionnée ci-dessus qui renforce les parois latérales du pot et qui porte l'impression voulue, sera appliquée avant ou après le remplissage ou l'operculage, et cette étape n'est pas représentée non plus.

Une bande composite 30 constituant l'opercule est enroulée sur la bobine 31 et est déroulée par les cylindres d'alimentation et de serrage 32. La bande 30 est alimentée vers une seconde paire de cylindres de serrage 34 puis guidée par un cylindre de guidage 36 de telle manière qu'elle se trouve à quelques millimètres parallèlement au-dessus de la série des pots 24 qui avance dans la direction de la flèche 38; la bande d'opercules 30′ est soumis à un déplacement à la même vitesse et dans la même direction que celles de la série des pots 24, par des moyens non représentés, jusqu'à ce qu'elle se trouve entre des mâchoires périphériques chauffantes 40 dont la forme et la grandeur sont adaptées aux dimensions du rebord du pot 24. Ces mâchoires se dirigent selon la séquence de l'avancement de la série des pots 24 qui se fait de manière intermittente, vers le rebord de chaque pot 24 selon les flèches 42, chauffent l'opercule et le rebord du pot à la température de thermocollage, et ferment ainsi le pot. Cette action de fermeture par thermocollage est assistée par des contre-pièces (non représentées) s'appuyant au rebord des pots par dessous; ces contre-pièces peuvent également être chauffées.

La série des pots 24 est ensuite amenée vers un dispositif de couperet 44 qui sépare les pots 24 l'un de l'autre.

Il est clair que la cadence d'avancement de la série des pots est déterminée par l'arrêt le plus long, soit le thermoformage, le remplissage, ou l'operculage.

La bande 30, 30′ formant l'opercule est déjà imprimée. A cause des tolérances normales de l'impression et à cause de paramètres physiques tels que température, humidité, gonflage par les solvants des encres d'impression, etc. pouvant exercer une influence, on a imprimé la bande 30 de telle manière que les impressions des opercules qui se suivent sont un peu plus rapprochées l'une de l'autre que la distance entre deux pots 24 qui se suivent dans la série continue à operculer. Si l'on ne prend pas cette mesure, il y a le risque que les faibles tolérances précitées s'accumulent avec le nombre de pots à operculer, et qu'à un moment donné, il n'y ait plus concordance entre l'ouverture du pot et l'opercule.

Afin de rétablir la concordance entre l'opercule et l'ouverture du pot, on étire la bande 30 entre les cylindres 32 et 34 . Cet étirage est automatiquement réglé par des repères sur le rebord 40 entre deux pots 24 suivants (ces repères ne sont pas représentés) ou par les rebords eux-mêmes en utilisant un dispositif optoélectrique avec amplificateur et dispositif de commande, connu en soi.

Lors de l'étirage de la bande 30, on constate qu'une fraction de l'élongation obtenue entre les cylindres 32 et 34 se perd lorsque la bande n'est plus soumise à la force d'étirage, à savoir en quittant les cylindres 34. L'opercule de l'état de la technique est constituée d'un filin d'aluminium ayant une épaisseur de 40 micron environ. Ce film est imprimé en surface, et l'impression est recouverte d'un vernis nitrocellulosique de protection. Sur la surface inférieure, l'aluminium porte une couche d'accrochage ("primer") qui est recouverte à son tour par une couche de vernis de scellage (thermocolle), par exemple contenant un copolymère de styrène, du polyisobutylène, etc; la composition de ce vernis est classique et connue.

Le film d'aluminium présente les propriétés mécaniques représentées à la Fig. 3. Cette figure est un diagramme ayant pour abscisse l'élongation A en unités arbitraires et pour ordonnée la force d'étirage F, en unités arbitraires également. Lorsqu'on applique au film d'aluminium une force croissante, l'élongation du film suit la courbe O, et quand la force F diminue, le film se rétrécie selon la courbe R. C'est-à-dire que, pour obtenir une élongation stable A₁, il est nécessaire d'appliquer non pas la force F₁ mais la force (plus grande) F₂.

Les matières plastiques qui ont été utilisées jusqu'à ce jour ne présentent pas cette propriété "d'hystérèse" de l'aluminium. Cette hystérèse est cependant nécessaire pour pouvoir operculer les pots dans les installations existantes de remplissage et d'emballage. Or, afin d'atteindre le but de l'invention, le recyclage complet, il est absolument nécessaire de supprimer le film d'aluminium dans la bande d'operculage.

La déposante a trouvé, au bout de longues recherches scientifiques et pratiques, qu'on peut remplacer le film d'aluminium par un film en polystyrène biorienté qui présente une courbe d'hystérèse presque identique à celle de l'aluminium. Ce film de polystyrène biorienté utilisé dans l'opercule selon l'invention présente une épaisseur comprise entre 50 et 70 »m. Cependant, le polystyrène bi-orienté présente un point de fusion trop bas, si bien que ce film peut être endommagé au cours de l'étape der thermocollage. En plus, il peut même être porté à fusion par les outils de thermocollage, qui sont décrits plus haut, et encrasser leurs surfaces actives. L'invention prévoit donc une couche de protection thermique, dirigée vers l'intérieur du pot à fermer, constitué par un vernis UV acrylique (connu en soi) qui résiste à des températures dépassant 420 °C. Le recyclage de cette matière ne pose pas de problèmes; elle est compatible avec le styrène du pot et avec les autres constituants plastique du pot et de l'opercule.

La Fig. 2 montre une coupe verticale d'un pot 24 rempli et operculé. On voit le pot proprement dit 24 entouré de la banderole 25. Le niveau du produit se trouvant dans le pot n'est pas représenté. On voit aussi que la paroi 43 est plus mince que le rebord 46 et le fond 48 ce qui est dû au thermoformage décrit. L'opercule 30′ est représentée en échelle agrandie pour mieux montrer sa construction. On voit d'abord la couche de thermocolle 50 qui est suivie vers le haut par le film en polystyrène biorienté 52. Ce film porte les marques d'impression 54, et le tout est recouvert d'une couche de vernis UV au polyuréthane 56 qui assure la propreté des mâchoires de thermocollage en faisant écran thermique, et qui remplit la tâche de barrière pour oxygène, CO₂ et vapeur d'eau. La barrière contre la lumière est assurée, ou bien par la couche d'impression, de nos jours couramment en vernis UV également, ou bien par la couche de polystyrène biorienté 52 qui peut être pigmentée si nécessaire. Cette couche 52 a une épaisseur généralement comprise entre 50 et 80 »m, de préférence environ 55 à 65 »m.

La couche de thermocollage 50 a une composition nouvelle, faisant partie de l'invention, car on a constaté que, si l'on choisit une thermocolle connue ayant une scellabilité thermique accrue, l'autoadhésivité augmente également ce qui est hautement indésirable. La déposante a trouvé une nouvelle thermocolle qui comprend les composants suivants:
- un constituant principal styrénique comprenant un copolymère SBS à blocs (styrène-butadiène-styrène), éventuellement modifié par du polyéthylène, acétate de vinyle ou d'éthylvinyle,
- et des additifs choisis parmi les cires microcristallines, le polyisobutylène, etc.

Ce vernis thermocollant présente une meilleure aptitude de thermoscellage et une autoadhésivité fortement réduite.

L'épaisseur totale de l'opercule se situe actuellement entre 60 et 90 »m environ. Des essais sont en cours pour diminuer encore ces épaisseurs.

L'opercule selon l'invention ne sert pas seulement à la fermeture des pots et d'autres récipients, thermoformés ou non, mais également de feuille d'emballage secondaire de produits divers comme le café, les biscuits, les desserts, la confiture, la crème et beaucoup d'autres, ou bien encore comme emballage primaire pour le savon et d'autres produits. L'invention n'est pas limitée à ces produits. Le composant-thermocollant de la feuille selon l'invention assure les protections discutées ci-dessus tout en étant parfaitement recyclable.

L'installation pour fabriquer, remplir et fermer les pots est en principe déjà connue et ne fait pas l'objet de la présente invention.

Le recyclage des emballages décrits peut se faire de manière principalement connue. Après lavage des récipients utilisés, on sépare la composante cellulosique ce qui est relativement simple en phase aqueuse, et on l'amène vers une réutilisation éventuelle. La matière plastique restante est séchée et concassée ou broyée; elle peut être utilisée telle quelle ou en coextrusion.

L'invention n'est pas limitée au contenu de la description du mode de réalisation ci-dessus, en particulier pas aux utilisations possibles décrites. De nombreuses modifications et adjonctions sont possibles qui sont à la portée de l'homme du métier et dans le cadre des revendications.

## Revendications

1. Récipient (24) recyclable en matière synthétique polymère, comprenant un corps thermoformé et une opercule (30′) contenant une couche en polystyrène biorienté, caractérisé en ce que ledit corps est entouré d'une banderole en papier (25), qu'en vue d'une récupération et recyclage améliorés, la dite banderole (25) est enduite d'une laque contenant de l'alcool polyvinylique, et que l'opercule (30′) est exempte de film d'aluminium et comprend une couche inférieure de thermocolle (50) et une couche supérieure de protection thermique (56) en vernis UV au polyuréthane, la couche de polysthyrène biorienté (52) étant intérieure.

2. Récipient selon la revendication 1, caractérisé en ce que la couche inférieure (50) de l'opercule thermocollable comprend un constituant principal qui est un copolymère styrénique SBS, et des additifs modifiant les propriétés collantes choisis parmi les cires microcristallines et le polyisobutylène.

3. Récipient selon la revendication 2, caractérisé en ce que le copolymère styrène-butadiène-styrène (SBS) est modifié par du polyéthylène, acétate de vinyle, ou acétate d'éthylvinyle.

4. Récipient selon l'une des revendications précédentes, caractérisé en ce que l'épaisseur de la couche intérieure en polystyrène biorienté (52) est comprise entre 50 et 80 »m.

5. Récipient selon la revendication 4, caractérisé en ce que la dite épaisseur est comprise entre 55 et 65 »m.

6. Récipient selon l'une des revendications précédentes, caractérisé en ce que l'épaisseur totale de l'opercule (30′) est comprise entre 60 et 90 »m.

7. Procédé de fabrication d'un récipient (24) selon l'une des revendications précédentes par thermoformage à partir d'une feuille de polystyrène (12) modifié ou non ayant une épaisseur comprise entre 0,2 et 1 mm environ, application d'une banderole circulaire (25) enduite d'une laque contenant de l'alcool polyvinylique pour renforcer des parois latérales (43) du récipient thermoformé (24), remplissage avec un produit désiré, et operculage par thermocollage d'une opercule telle que celle définie dans la revendication précédente retenue, pour le récipient, en vue d'une récupération et recyclage améliorés.

8. Opercule recyclable (30′) pour la fermeture d'un récipient recyclable (24) en matière synthétique polymère ou utilisable pour emballage thermocollable et contenant un film de polystyrène biorienté, caractérisée en ce qu'elle est exempte de film d'aluminium et comprend une couche inférieure de thermocolle (50) et une couche supérieure de protection thermique (56) en vernis UV au polyuréthane, la couche de polystyrène biorienté (52) étant intérieure.

9. Opercule selon la revendication 8, caractérisée en ce que la couche inférieure de l'opercule thermocollable (50) comprend un constituant principal qui est un copolymère styrénique SBS, et des additifs modifiant les propriétés collantes choisis parmi les cires microcristallines et le polyisobutylène.

10. Opercule selon la revendication 9, caractérisée en ce que le copolymère styrène-butadiène-styrène (SBS) est modifié par du polyéthylène, acétate de vinyle, ou acétate d'éthylvinyle.

11. Opercule selon l'une des revendications précédentes, caractérisée en ce que l'épaisseur de la couche intérieure en polystyrène biorienté (52) est comprise entre 50 et 80 »m.

12. Opercule selon la revendication 11, caractérisé en ce que la dite épaisseur est comprise entre 55 et 65 »m.

13. Opercule selon l'une des revendications 8 à 12, caractérisée en ce que son épaisseur totale est comprise entre 60 et 90 »m.

14. Feuille d'emballage recyclable en matière synthétique pour produits commerciaux, caractérisée en ce qu'elle est exempte de film d'aluminium et comprend au moins trois couches, à savoir une couche inférieure (50) de thermocolle, une couche intérieure (52) constituée par un film en polystyrène biorienté, et une couche supérieure (56) de protection thermique en vernis UV au polyuréthane.

15. Feuille d'emballage selon la revendication 14, caractérisée en ce que sa couche inférieure (50) thermocollable comprend un constituant principal qui est un copolymère styrénique SBS, et des additifs modifiant les propriétés collantes choisis parmi les cires microcristallines et le polyisobutylène.

16. Feuille d'emballage selon la revendication 15, caractérisée en ce que le copolymère styrène-butadiène-styrène (SBS) est modifié par du polyéthylène, acétate de vinyle, ou acétate d'éthylvinyle.

## Patentansprüche

1. Wiederverwertbarer Behälter (24) aus polymerem synthetischem Material, mit einem warmgeformten Körper und einem Verschlussdeckel (30′), der eine Schicht aus bisorientiertem Polystyrol aufweist, dadurch gekennzeichnet, dass der genannte Körper von einem Papierband (25) umgeben und das dieses Papierband (25) zwecks verbesserter Wiedergewinnung und -verwertung mit einem Polyvinylalkohol enthaltendem Lack überzogen ist, und dass der Verschlussdeckel (30') aluminiumfrei ist und eine Unterschicht (50) aus einem Wärmekleber und eine Wärmeschutz-Oberschicht (56) aus einem Polyurethan-UV-Lack aufweist, wobei die Schicht aus bisorientiertem Polystyrol (52) eine Innenschicht ist.

2. Behälter nach Anspruch 1, dadurch gekennzeichnet, dass die Unterschicht (50) des thermoklebenden Verschlussdeckels als hauptsächlichen Bestandteil ein SBS-Copolymer auf Styrolbasis sowie Additive enthält, welche die Klebeeigenschaften modifizieren und aus mikrokristallinen Wachsen und Polyisobutylen ausgewählt sind.

3. Behälter nach Anspruch 1, dadurch gekennzeichnet, dass das Styrol-Butadien-Styrol-Copolymer (SBS) durch Polyethylen, Vinylacetat oder Ethylvinylacetat modifiziert ist.

4. Behälter nach einem der vorstehenden Ansprüche, dadurch gekennzeichnet, dass die Dicke der Innenschicht (52) aus bisorientiertem Polystyrol zwischen 50 und 80 »m liegt.

5. Behälter nach Anspruch 4, dadurch gekennzeichnet, dass die genannte Dicke zwischen 55 und 65 »m liegt.

6. Behälter nach einem der vorstehenden Ansprüche, dadurch gekennzeichnet, dass die Gesamtdicke des Verschlussdeckels (30′) zwischen 60 und 90 »m liegt.

7. Verfahren zur Herstellung eines Behälters (24) nach einem der vorstehenden Ansprüche durch Thermoformung einer Folie aus gegebenenfalls modifiziertem Polystyrol (12) mit einer Dicke von etwa 0,2 bis 1 mm, Aufbringen eines ringförmigen Papierbandes (25), das mit einem polyvinylalkoholhaltigem Lack überzogen ist, zwecks Verstärkung der Seitenwandungen (43) des wärmegeformten Behälters (24), Befüllung mit einem gewünschten Produkt und Wärmeverklebung mit einem Verschlussdeckel, wie er in vorstehenden, den Behälter betreffenden Ansprüchen definiert ist, zum Zwecke einer verbesserten Wiedergewinnung und Wiederverwertung.

8. Wiederverwertbarer Verschlussdeckel (30') zum Verschliessen eines wiederverwertbaren Behälters (24) aus polymerem synthetischem Material oder zur Verwendung als wärmeverklebbare Verpackung, enthaltend eine Folie aus bisorientiertem Polystyrol, dadurch gekennzeichnet, dass er frei von Aluminiumfolie ist und eine Unterschicht (50) aus Wärmekleber und eine Wärmeschutz-Oberschicht (56) aus Polyurethan-UV-Lack enthält, wobei die Schicht aus bisorientiertem Polystyrol (52) eine Innenschicht ist.

9. Verschlussdeckel nach Anspruch 8, dadurch gekennzeichnet, dass die Unterschicht (50) des wärmeverklebbaren Verschlussdeckels ein SBS-Styrolcopolymer als Hauptbestandteil und daneben Zusätze enthält, die die Klebeeigenschaften modifizieren und aus mikrokristallinen Wachsen und Polyisobutylen ausgewählt sind.

10. Verschlussdeckel nach Anspruch 8, dadurch gekennzeichnet, dass das Styrol-Butadien-Copolymer (SBS) durch Polyethylen, Vinylacetat oder Ethylvinylacetat modifiziert ist.

11. Verschlussdeckel nach einem der vorstehenden Ansprüche, dadurch gekennzeichnet, dass die Dicke der Unterschicht (52) aus bisorientiertem Polystyrol zwischen 50 und 80 »m liegt.

12. Verschlussdeckel nach Anspruch 11, dadurch gekennzeichnet, dass die genannte Dicke zwischen 55 und 65 »m liegt.

13. Verschlussdeckel nach einem der Ansprüche 8 bis 12, dadurch gekennzeichnet, dass seien Gesamtdicke zwischen 60 und 90 »m liegt.

14. Wiederverwertbare Verpackungsfolie aus Kunststoff für Handelswaren, dadurch gekennzeichnet, dass sie frei von Aluminiumfolie ist und mindestens drei Schichten aufweist, nämlich eine Unterschicht (50) aus Wärmekleber, eine Innenschicht (52) aus einer Folie aus bisorientiertem Polystyrol, und eine Wärmeschutz-Oberschicht (56) aus Polyurethan-UV-Lack.

15. Verpackungsfolie nach Anspruch 14, dadurch gekennzeichnet, dass ihre wärmeverklebbare Unterschicht (50) als Hauptbestandteil ein SBS-Styrolcopolymer enthält und weiterhin Zusätze, die die Klebeeigenschaften modifizieren, ausgewählt aus mikrokristallinen Wachsen und Polyisobutylen.

16. Verpackungsfolie nach Anspruch 15, dadurch gekennzeichnet, dass das Styrol-Butadien-Copolymer (SBS) durch Polyethylen, Vinylacetat oder Ethylvinylacetat modifiziert ist.

## Claims

1. Recyclable container (24) of a synthetic polymer material, comprising a thermoformed body and a closure lid (30′) which contains a layer of bisoriented polystyrene, characterised in that said body is surrounded by a paper band (25) which is coated by a polyvinyl alcohol containing lacquer for better recovery and recycling, and that the closure lid (30′) is free from aluminium film and comprises a lower heat sealing layer (50) and an upper heat protecting layer (56) of a polyurethane UV varnish, said layer of bisoriented polystyrene being an inner layer.

2. Container according to claim 1, characterised in that the lower layer (50) of the heat sealable lid contains an SBS styrene copolymer as a major component and furthermore additives for modifying the adhesive properties, selected from microcrystalline waxes and polyisobutylene.

3. Container according to claim 2, characterised in that the styrene butadiene styrene (SBS) copolymer is modified by polyethylene, vinyl acetate or ethylvinyl acetate.

4. Container according to any one of the preceding claims, characterised in that the thickness of the inner layer (52) of bisoriented polystyrene is within the range of 50 to 80 »m.

5. Container according to claim 4, characterised in that the said thickness is within the range of 55 to 65 »m.

6. Container according to any one of the preceding claims, characterised in that the total thickness of the closure lid (30′) is within the range of 60 to 90 »m.

7. Process for the manufacture of a container (24) according to any one of the preceding claims by thermoforming from a polystyrene sheet (12) where the polystyrene is modified or not, having a thickness within the range of about 0.2 to 1 mm, application of a circular band (25) coated with a polyvinyl alcohol containing lacquer in order to reinforce the side walls (43) of the thermoformed container (24), filling with the desired product, and closing it by heat sealing with a closure lid such as defined in the preceding claim related to the container.

8. Recyclable closure lid (30′) for the closing of a recyclable container (24) of a synthetic polymer material or useful as a heat sealable packaging material, containing a film of bisoriented polystyrene, characterised in that it is free from aluminium film and comprises a lower heat sealing layer (50) and an upper heat protecting layer (56) of a polyurethane UV varnish, said layer of bisoriented polystyrene being an inner layer.

9. Closure lid according to claim 8, characterised in that the lower layer (50) of the heat sealable lid contains an SBS styrene copolymer as a major component and furthermore additives for modifying the adhesive properties, selected from microcrystalline waxes and polyisobutylene.

10. Closure lid according to claim 9, characterised in that the styrene butadiene styrene (SBS) copolymer is modified by polyethylene, vinyl acetate or ethylvinyl acetate.

11. Closure lid according to any one of the preceding claims, characterised in that the thickness of the inner layer (52) of bisoriented polystyrene is within the range of 50 to 80 »m.

12. Closure lid according to claim 11, characterised in that the said thickness is within the range of 55 to 65 »m.

13. Closure lid according to any one of claims 8 to 12, characterised in that its total thickness is within the range of 60 to 90 »m.

14. Recyclable packaging sheet of synthetic material for commercial products, characterised in that it is free from aluminium film and comprises at least three layers, namely a lower heat sealing layer (50), an inner layer (52) formed by a film of bisoriented polystyrene, and an upper heat protecting layer (56) of a polyurethane UV varnish.

15. Packaging sheet according to claim 14, characterised in that its lower heat sealable layer (50) contains an SBS styrene copolymer as a major component and furthermore additives for modifying the adhesive properties, selected from microcrystalline waxes and polyisobutylene.

16. Packaging sheet according to claim 15, characterised in that the styrene butadiene styrene (SBS) copolymer is modified by polyethylene, vinyl acetate or ethylvinyl acetate.
